**Europäisches Patentamt**

**European Patent Office**

**Office européen des brevets**

(11) Numéro de publication : **0 373 124 B1**

# FASCICULE DE BREVET EUROPEEN

(45) Date de publication du fascicule du brevet :
**11.03.92 Bulletin 92/11**

(51) Int. Cl.$^5$ : **B23B 31/02**

(21) Numéro de dépôt : **89830520.6**

(22) Date de dépôt : **22.11.89**

(54) **Joint pour équipement porte-outil modulaire de machine-outil pour l'usinage des métaux et autres.**

(30) Priorité : **30.11.88 IT 953588**

(43) Date de publication de la demande :
**13.06.90 Bulletin 90/24**

(45) Mention de la délivrance du brevet :
**11.03.92 Bulletin 92/11**

(84) Etats contractants désignés :
**CH DE ES FR GB LI SE**

(56) Documents cités :
**EP-A- 0 015 248**
**DE-A- 2 454 146**
**DE-A- 3 540 109**
**DE-A- 3 711 412**
**GB-A- 2 137 124**
**US-A- 2 440 739**

(73) Titulaire : **BAKUER ITALIANA S.p.A.**
**Via del Farneto San Martino alla Palma**
**I-50010 Scandicci Firenze (IT)**

(72) Inventeur : **Pisani, Gianluigi**
**Via Pisani 122**
**I-50018 SCANDICCI (Firenze) (IT)**

(74) Mandataire : **Martini, Lazzaro**
**Ufficio Brevetti Ing. Lazzaro Martini Via dei**
**Rustici 5**
**I-50122 Firenze (IT)**

EP 0 373 124 B1

# Description

La présente invention concerne un joint pour un équipement porte-outil modulaire pour machine-outil pour l'usinage des métaux et autres, selon le préambule de la revendication 1, voir GB-A-2 137 124.

Pour répondre à la demande toujours croissante de souplesse dans les machines-outils avec des dispositifs de changement et de blocage des porte-outils et des éléments de fixation sur le nez de broche de la machine, commandés par une unité de conmmande numérique, les constructeurs ont dû réaliser des équipements permettant l'interchangeabilité de la fixation du porte-outil à la machine, quelle que soit sa forme, la possibilité de faire varier le type de porte-outil en fonction de l'usinage requis (alésage, fraisage, taraudage) et enfin la possibilité de modifier les dimensions des porte-outils, c'est-à-dire le diamètre et la longueur, pour pouvoir atteindre toutes les zones à usiner sans altérer la rigidité de l'ensemble.

Il est connu, d'après le brevet IT 1.121.138, une série d'éléments pour équipement porte-outil modulaire pour l'usinage, en particulier pour l'enlèvement de métal au moyen d'une machine-outil, qui comprend plusieurs éléments adaptateurs pourvus de moyens de fixation au nez de broche de la machine, plusieurs éléments intermédiaires de différents diamètres et longueurs, et plusieurs têtes porte-outil et dans lequel l'accouplement entre deux éléments successifs quelconques est obtenu par le vissage d'une queue, ayant une partie intermédiaire cylindrique et une partie terminale filetée, dans un siège axial formant guide cylindrique et pourvu d'un filetage correspondant, avec butée axiale de deux surfaces planes des deux éléments; chaque élément peut éventuellement être pourvu d'un réglage axial de la butée, et, de plus, le diamètre du siège et de la queue d'un même élément peut être variable pour constituer une série de réducteurs.

Toutefois, l'usinage avec enlèvement de copeaux à très grandes vitesses rendues possibles grâce à la plus grande puissance disponible au niveau de la broche des machines-outils les plus récentes, engendre, à l'extrémité de l'outil, un couple de travail qui dépasse le couple de serrage engendré par le frottement entre les surfaces planes de contact des deux éléments contigus et déterminé par le vissage de la partie filetée de la queue dans le siège axial correspondant. Cela provoque un vissage supplémentaire du joint qui gêne ou même empêche le dévissage du joint au moment du démontage des parties modulaires accouplées, altérant ainsi la capacité de fonctionnement de l'ensemble tout entier.

Il est également connu, d'après les documents DE-35 40 109 et GB 2.137.124, un joint pour bloquer entre eux un adaptateur et un porte-outil. Le joint du premier document utilise un pivot en deux parties de diamètres différents, chaque partie étant pourvue d'un filetage, et les deux filetages étant de pas différents. Le joint du deuxième document utilise un pivot de diamètre unique qui est pourvu de deux filetages de pas différent. En outre, le joint décrit dans lesdits documents utilise une languette ou une goupille pour le blocage en rotation entre l'adaptateur et le porte-outil.

D'autre part, les deux filetages ne semblent pas être en mesure de garantir l'inamovibilité axiale et la position fixe pour la languette ou goupille ne permet pas la variation de l'orientation entre l'adaptateur et le porte-outil. En outre, les joints décrits dans lesdits documents ne permettent pas de fixer le pivot au porte-outil ni le passage de l'huile servant au refroidissement de l'outil.

La présente invention a pour but d'éliminer les inconvénients précités en proposant un joint pour l'assemblage de deux éléments successifs quelconques d'un équipement modulaire du type mentionné, qui soit apte à absorber les couples de travail variables qui se développent à l'extrémité de l'outil, en évitant l'augmentation critique du couple de serrage optimal.

Ce but est atteint par un joint selon l'invention comme défini dans la revendication 1.

Conformément à l'invention, a été réalisé un joint comprenant un arbre, qui est pourvu d'une extrémité filetée, susceptible d'être assemblé dans le siège axial formant guide cylindrique d'un premier élément creux et qui est pourvu en outre d'une rainure pour son serrage au moyen d'une clef passant dans ledit premier élément; joint comprenant en outre des moyens à languette pour le blocage en rotation du deuxième élément par rapport au premier élément et qui est caractérisé par le fait que le blocage axial du deuxième élément par rapport audit arbre est obtenu au moyen d'une couronne de billes logées dans une gorge périphérique qui est ménagée à moitié dans l'arbre et à moitié dans la queue du deuxième élément.

La rotation dudit arbre par rapport au premier élément dans un sens ou dans l'autre, entraîne le blocage ou respectivement le déblocage, du premier élément (adaptateur) au deuxième élément (porte-outil).

Et pour obtenir le blocage en rotation des deux éléments selon un possible différent orientament réciproque il est avantageusement prévu de ménager dans la surface latérale du deuxième élément une série de rainures ouvertes en direction axiale et angulairement équidistantes, pour engager la languette fixée au premier élément et faisant saillie en direction axiale en sorte que l'engagement dans la rainure choisie est obtenu à cause du rapprochement en direction axiale en vrille entre l'arbre du joint et le premier élément.

Pour l'adaptation du joint à des cônes de fixation existant déjà sur le maché et non pourvus du siège pour la languette de blocage, sont avantageusement prévues plusieurs rainures prismatiques pratiquées dans la surface latérale de l'extrémité postérieure de l'arbre du joint et une vis sans tête de blocage installée dans un trou traversant radialement le deuxième élément.

Dans ces conditions, le couple de travail s'oppose au seul couple de serrage, c'est-à-dire la force de frottement entre les surfaces de contact du premier et du deuxième élément, permettant ainsi un assemblage rigide entre l'arbre et le deuxième élément et une fonctionnalité équivalente à celle des équipements modulaires utilisés auparavant et déjà décrits dans le brevet précité.

La solution proposée par la présente invention permet la réalisation d'un joint qui conserve le montage par vissage avec mouvement de rotation-translation d'une queue reliée au deuxième élément dans un siège axial formant guide cylindrique du premier élément, mais qui, une fois atteint le couple de serrage optimal développé par le frottement engendré entre les surfaces de contact des deux éléments, dans le cas où le couple de travail à l'extrémité de l'outil dépasse le couple de serrage, celui-ci est absorbé par l'élément de blocage de la rotation du deuxième élément. De cette manière il est possible de conserver inchangé le couple de serrage optimal et d'assurer un montage toujours facile et fiable des deux éléments. En outre, lesdites rainures prismatiques permettent l'orientation, c'est-à-dire l'indexage, par rapport au premier élément de l'outil porté par le deuxième élément, par exemple le cône de fixation au nez de broche de la machine, selon un certain arc de cercle qui dépend du nombre des rainures. Enfin, toutes les caractéristiques de modularité et de rigidité des éléments, come fixées précédemment, sont conservées avec possibilité d'adapter ce joint même aux éléments déjà existant et non prévus pour ce joint.

Ces avantages et caractéristiques ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins dans lesquels:

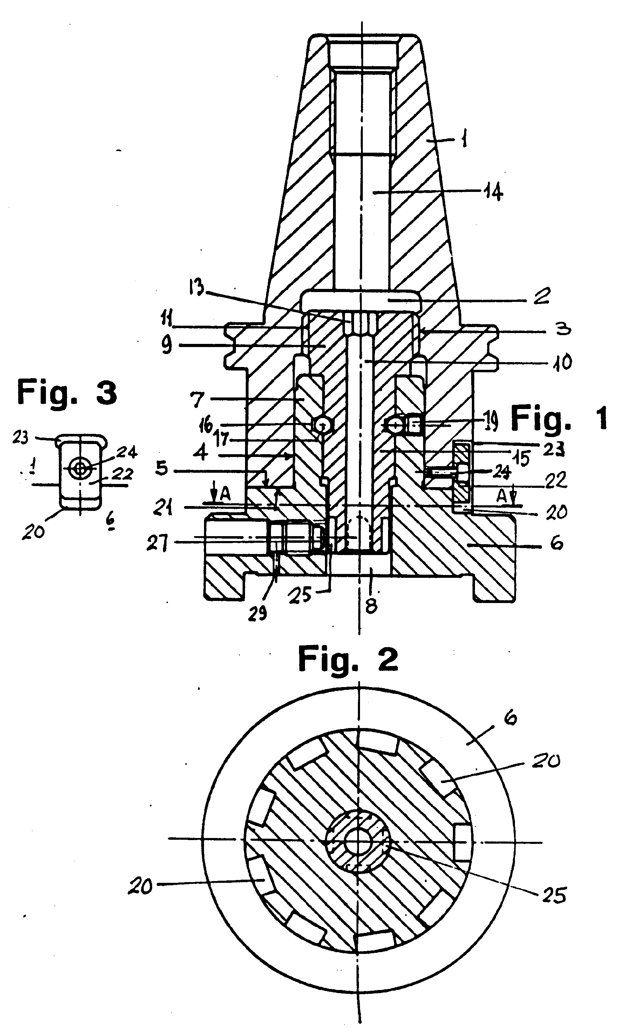

– la FIG. 1 représente une vue longitudinale en coupe d'un joint conformément à l'invention, pour l'assemblage entre un cône de fixation et un support de tête porte-outil;

– la FIG. 2 représente la vue en coupe transversale suivant la ligne AA de la Fig. 1; et

– la FIG. 3 représente une vue de face détaillée d'un élément de blocage de la rotation.

En référence aux figures des dessins annexés, un joint pour équipement porte-outil modulaire pour machine-outil pour l'usinage des métaux et autres, pour assembler entre eux un cône creux 1 de fixation au nez de broche de la machine, pourvu d'un siège axial 2 avec filetage interne 3 et formant guide cylindrique 4 avec épaulement de butée axiale 5, avec un élément 6 de support d'un outil, pourvu d'une queue cylindrique 7 avec trou axial 8, joint qui comprend conformément à l'invention:

– un arbre 9 avec l'extrémité antérieure pourvue d'un filetage 11 correspondant à celui 3 du siège axial 2 du cône 1 et d'un siège axial de section polygonale 13 pour la réception de l'extrémité correspondante d'une clef de serrage (non représentée) à introduire à travers le trou axial 14 du cône de fixation 1; la tige 15 dudit arbre 9 est pourvue d'une gorge périphérique externe de section polygonale, qui délimite, en coopération avec une gorge périphérique interne symétrique de la queue 7 du support 6, un siège 16 pour une couronne de billes 17 qui sont maintenues en place par une vis sans tête 19 insérée dans un trou radial traversant correspondant pratiqué dans ladite queue 7. Cette couronne de billes 17 permet la libre rotation du support 6 sur l'arbre 9 mais sans translation axiale.

Ledit arbre 9 est avantageusement pourvu d'un trou axial 10, s'étendant sur toute sa longueur, pour permettre l'adduction d'un fluide réfrigérant à partir du cône 1, permettant ainsi sa transmission à l'outil porté par le support 6;

– une série de rainures prismatiques 20, dans l'exemple au nombre de neuf, pratiquées dans la surface latérale supérieure du support 6 à proximité de la surface plane 21 de contact avec l'épaulement 5 du cône de fixation, dont une peut être engagée par une languette 22 logée dans une cavité correspondante 23 prévue dans la surface latérale inférieure du cône 1 et fixée sur le cône même au moyen d'une vis de blocage 24.

Le montage de ce joint est effectué de la manière suivante. L'arbre 9, sur lequel le support 6 est enfilé et avec les billes 17 précédemment mises en place dans la gorge 16, est introduit dans le siège axial 2 du cône de fixation 1; une clef de serrage, introduite à travers le trou 14 du cône 1 de manière à engager la cavité 13 de l'arbre 9, est tournée de manière à visser l'extrémité filetée 11 de l'arbre 9 dans le filetage interne 3 du siège 2; le vissage de l'arbre 9, en coopération avec la couronne de billes 17, entraîne une translation de la queue 7 du support 6 dans le guide cylindrique 4 du siège 2 qui provoque la pénétration de la languette 22 dans une rainure 20 correspondante du support 6 de manière à obtenir le blocage en rotation de ce dernier. Le serrage se poursuit jusqu'à l'obtention d'un couple optimal engendré par le frottement créé entre les surfaces 5 et 21. La rainure 20 choisie pour l'orientation ou indexage de l'outil porté par le support 6 peut aisément être positionnée en correspondance de la languette de blocage 22 en assurant un positionnement toujours sûr et précis.

Pendant la phase de travail avec l'outil, le couple de travail à l'extrémité de l'outil est absorbée par le couple de serrage développé par le frottement entre les surfaces de contact 5 et 21 au moment du serrage, et le couple supplémentaire engendré pendant l'usinage avec enlèvement de copeaux est absorbé par la languette 22 sans augmentation du couple de serrage.

Pour permettre l'adaptation du joint à des cônes de fixation ou à d'autres éléments déjà existants sur le marché et non pourvus de la rainure 23 pour le logement de la languette de blocage 22, il est prévu, conformément à l'invention, de pratiquer dans la surface latérale de l'extrémité postérieure de l'arbre 9, une pluralité de rainures prismatiques 25, par exemple au nombre de quatre, dont une est destinée à être engagée par une vis sans tête 27 vissée dans un trou radial correspondant traversant le support 6 et bloqué en place par une goupille élastique 29 insérée dans un trou axial correspondant dudit support 6.

De cette manière, les conditions existant dans les joints décrits dans le brevet précité sont rétablies, en permettant un assemblage rigide entre l'arbre 9 et le support 6 au moyen de l'action combinée de la couronne de billes 17 et de la dent de blocage 27; le couple de travail est alors absorbé comme dans lesdits équipements par le frottement créé au serrage entre les surfaces de contact des deux éléments.

Il va de soi que ce joint peut être prévu, non entre un cône de fixation et un support de tête porte-outil, mais entre deux éléments quelconques d'un équipement modulaire pour machines-outils, par exemple sur des éléments intermédiaires ou réducteurs.

## Revendications

1. Joint pour équipement porte-outil modulaire de machine-outil pour assembler un premier élément creux (1) pourvu d'un siège cylindrique axial (4) avec épaulement de butée axiale (5) et d'un filetage interne (3), avec un deuxième élément creux (6) pourvu d'une queue cylindrique (7) pour le siège (4) du premier élément (1), et comprenant un arbre (9) pourvu d'un filetage (11) apte à coopérer avec le filetage (3) du premier élément (1) et d'un siège (13) pour une clef de serrage correspondante, et comprenant en outre des moyens à languette (22) pour le blocage en rotation du deuxième élément (6) par rapport au premier élément (1), caractérisé en ce que le blocage axial du deuxième élément (6) par rapport audit arbre (9) est obtenu au moyen d'une couronne de billes (17) logées dans une gorge périphérique (16), qui est ménagée à moitié dans l'arbre (9) et à moitié dans la queue (7) du deuxième élément (6), de manière à ce que la rotation dudit arbre (9) dans un sens ou dans l'autre entraîne le blocage ou respectivement le déblocage du deuxième élément par rapport au premier; et en ce que le blocage en rotation du deuxième élément (6) par rapport audit arbre (9) est obtenu au moyen d'une dent (27) qui passe radialement dans le deuxième élément (6) avec la tête introduite dans une de plusieurs cavités (25) pratiquées dans l'arbre (9) et maintenue en place au moyen d'une cheville élastique (29).

2. Joint suivant la revendication 1, caractérisé en ce que lesdits moyens (20,22,24) pour obtenir le blocage en rotation du deuxième élément (6) avec le premier élément (1) consistent en une languette (22) fixée au premier élément (1) au moyen d'une vis (24) de manière à faire saillie axialement de ce dernier et lui permettre de se loger dans une de plusieurs cavités (25) ménagées, angulairement équidistantes, dans le deuxième élément (6).

3. Joint suivant la revendication 1, caractérisé en ce que ledit arbre (9) est pourvu d'un trou axial (10) pour permettre l'alimentation d'un fluide réfrigérant du premier élément (1) et son passage dans le deuxième élément (6) jusqu'à l'outil.

## Claims

1. Joint for modular toolholder equipment of machine tools, to assemble a first hollow element (11) provided with an axial cylindrical seat (4) with a shoulder of an axial stop (5) and internal thread (3), with a second hollow element (6) provided with a cylindrical shank (7) for the seat (4) of the first element (1) and consisting of a shaft (9) provided with a thread (11) suitable for engaging with the thread (3) of the first element (1) and a seat (13) for a corresponding clamping key and also consisting of a tongue (22) for clamping in rotation of the second element (6) relative to the first element (1), characterized in that the axial clamping of the second element (6) relative to the said shaft (9) is obtained by means of a set of balls (17) situated in a peripheral throat (16), which is recessed half in the shaft (9) and half in the shank (7) of the second element (6), in such a way that the rotation of the said shaft (9) in one or the other direction involves the clamping or unclamping of the second element relative to the first; and the clamping in rotation of the second element (6) relative to the said shaft (9) is obtained by means of a tooth (27) which passes radially into the second element (6) with the head introduced into one of several cavities (25) made in the shaft (9) and kept in place by an elastic peg (29).

2. Joint according to Claim 1, characterized in that the said means (20, 22, 24) of obtaining clamping in rotation of the second element (6) with the first element (1) consists of a tongue (22) fixed to the first element (1) by means of a screw (24) so as to project axially from the latter and to enable it to penetrate into one of several cavities (25), recessed and angularly equidistant, in the second element (6).

3. Joint according to Claim 1, characterized in that the said shaft (9) is provided with an axial hole (10) to permit the feed of a cooling liquid for the first element (1) and its passage into the second element (6) up to the tool.

**Patentansprüche**

1. Verbindung für eine modulare Werkzeughaltereinrichtung einer Werkzeugmaschine zum Zusammenfügen eines ersten hohlen Elements (1), das mit einem axialen zylindrischen Sitz (4) mit einer axialen Anschlagschulter (5) und einem Innengewinde (3) versehen ist, mit einem zweiten hohlen Element (6), das mit einem zylindrischen Ansatz (7) für den Sitz (4) des ersten Elements (1) versehen ist, umfassend eine Welle (9), die mit einem Gewinde (11) versehen ist, das zum Zusammenwirken mit dem Gewinde (3) des ersten Elements (1) ausgebildet ist, und mit einem Sitz (13) für einen entsprechenden Spannschlüssel, und ferner umfassend Zungeneinrichtungen (22) für die Rotationsblockierung des zweiten Elements (6) bezüglich des ersten Elements (1), dadurch **gekennzeichnet**, daß die axiale Blockierung des zweiten Elements (6) bezüglich der Welle (9) mittels eines Kugelkranzes (17) erzielt wird, der in einer Umfangsnut (16) angeordnet ist, die zur Hälfte in der Welle (9) und zur Hälfte in dem Ansatz (7) des zweiten Elements (6) vorgesehen ist, und zwar in der Weise, daß die Rotation der Welle (9) in beiden Richtungen die blockierung bzw. die Entblockierung des zweiten Elements bezüglich des ersten zur folge hat; und daß die Rotationsblockierung des zweiten Elements (6) bezüglich der Welle (9) mittels eines Zahns (27) erzielt wird, der radial in dem zweiten Element (6) verläuft, wobei der Kopf in eine von mehreren Hohlräumen (25) eingeführt ist, die in der Welle (9) vorgesehen sind, und mittels eines elastischen Stiftes (29) an seinem Platz gehalten wird.

2. Verbindung nach Anspruch 1, dadurch **gekennzeichnet**, daß die Mittel (20, 22, 24) zur Erzielung der Rotationsblockierung des zweiten Elements (6) mit dem ersten Element (1) aus einer Zunge (22) bestehen, die am ersten Element (1) mittels einer Schraube (24) derart befestigt ist, daß sie von der letzteren axial vorspringt und ihr ermöglicht wird, in einem der mehreren Hohlräume (25) unterzukommen, die mit gleichen Winkelabständen in dem zweiten Element (6) angebracht sind.

3. Verbindung nach Anspruch 1, dadurch **gekennzeichnet**, daß die Welle (9) mit einem axialen Loch (10) versehen ist, um die Zufuhr eines Kühlfluids von dem zweiten Element (1) her und dessen Durchgang in dem zweiten Element (6) bis zum Werkzeug zu gestatten.

**Fig. 3**

**Fig. 1**

**Fig. 2**